# EUROPEAN PATENT SPECIFICATION

(11) **EP 3 710 539 B1**
(45) Date of publication and mention of the grant of the patent: **12.06.2024**
(21) Application number: 18804578.5
(22) Date of filing: 15.11.2018
(51) Int. Cl.: C09D 5/16, C09D 133/06, C09D 7/63, C08F 220/18, C08F 220/14, C08K 5/09, C08F 220/08, C08F 230/08

(54) **ANTIFOULING COMPOSITION**
ANTIFOULING ZUSAMMENSETZUNG
COMPOSITION ANTISALISSURES

(30) Priority: 15.11.2017 GB 201718898
(43) Date of publication of application: 23.09.2020
(73) Proprietor: Jotun A/S, 3202 Sandefjord (NO)
(72) Inventor: JOHNSEN, Henning, 3229 Sandefjord (NO); JACKSON, Seamus Michael, 3229 Sandefjord (NO); DAHLING, Marit, 3218 Sandefjord (NO); GLANSBERG, Karin, 7444 Trondheim (NO)
(74) Representative: Dehns
(86) International application number: PCT/EP2018/081425
(87) International publication number: WO 2019/096928

(56) References cited:
- EP-A1- 1 342 756
- WO-A2-2011/151438
- CN-A- 106 349 420

## Description

### Field of the invention

The present invention relates to antifouling coating compositions, more specifically to marine antifouling coating compositions comprising a rosin and certain monocarboxylic acids. The invention further relates to methods of applying the antifouling coating compositions on a substrate, and to substrates coated with the antifouling coating compositions.

### Background

Surfaces that are submerged in seawater are subjected to fouling by marine organisms such as green and brown algae, barnacles, mussels, tube worms and the like. On marine constructions such as vessels, oil platforms, buoys, etc. such fouling is undesired and has economic consequences. The fouling may lead to biological degradation of the surface, increased load and accelerated corrosion. On vessels the fouling will increase the frictional resistance which will cause reduced speed and/or increased fuel consumption. It can also result in reduced manoeuvrability.

To prevent settlement and growth of marine organisms antifouling paints are used. These paints generally comprise a film-forming binder, together with different components such as pigments, fillers, solvents and biologically active substances.

It is important for a binder used in an antifouling coating composition to have good polishing properties in order to prevent fouling. If the binder displays no polishing, there is very low release of the biocide and it is ineffective as an antifouling coating. It is, however, also important that the polishing is not too rapid.

Almost all commercial antifouling paints incorporate rosin as part of the binder system. In such systems, the formation of an excessive leached layer is an unwanted process. The leached layer is an area, towards the paint surface, where soluble components, including biocides, have been released from the coating. The composition of the leached layer is therefore altered in comparison to the remaining antifouling paint film.

This leached layer will act as a diffusion barrier for biocides from the intact/underlying region of the paint film. As the leached layer thickness increases the rate of biocide release falls and the probability of fouling will increase. The leached layer can be so thick that it results in the complete failure of the coating and fouling will develop. The inventors sought to address this issue.

The inventors have now unexpectedly established that by using certain liquid monocarboxylic acids to partially replace the rosin component of the binder system, the extent of leach layer formation can be reduced. This is achieved whilst maintaining or even decreasing the viscosity of the coating composition. Reduced viscosity allows lower levels of solvent to be used. The inventors have also established that coatings produced by applying the coating composition on a substrate have a good balance between hardness and flexibility.

Antifouling paint compositions comprising a rosin and optionally a monocarboxylic acid have been described previously.

EP1342756 describes an antifouling coating composition comprising: (a) a silyl ester copolymer including an unsaturated carboxylic acid silyl ester monomer; (b) a carboxylic acid; (c) a bivalent or trivalent metal compound; and (d) a dehydrating agent. In an embodiment, it is taught that the carboxylic acid (b) may be a resin acid or a derivative thereof. In an alternative embodiment it is taught that the carboxylic acid (b) may, instead of a resin acid, be an organic acid selected from isononanoic acid, versatic acid, naphthenic acid, oleic acid, linoleic acid, linolenic acid, tall oil fatty acid and soybean oil fatty acid. In the examples the acid component (b) is one of isononanoic acid, versatic acid or rosin. This reference does not teach a composition containing a mixture of a rosin and an organic (non-rosin) acid.

EP0289481 describes marine paint compositions comprising a first component (i) selected from (a) one or more rosin-based components, (b) one or more metal salts of saturated C6 to C12 branched or alicyclic fatty acids, or mixtures thereof; and (ii) a binder which is a copolymer of a cyclic amide, an acrylic comonomer and a methacrylate or styrene comonomer; (iii) a metalliferous pigment and (iv) at least one biocide which may be identical to the pigment.

WO95/10568 describes paint compositions comprising 1 to 20 wt% wood rosin, 20 to 70 wt% cuprous oxide, 1 to 25 wt% zinc pyrithione, and 0.3 to 15 wt% of oxalic acid or a carboxylic acid of formula (HOOC)nRCOOH where n is 0 or 1 and R is C1 to C20 alkyl, alkenyl, alkynyl, cycloalkyl, cycloalkenyl, cycloalkynyl, aryl, aralkyl and combinations thereof. Preferred carboxylic acids are those in which R is C3 to C10. Such compositions are said to have enhanced biocidal efficacy and enhanced resistance to gelation. With the exception of Formulation examples 2 and 12, the exemplified paint compositions also contain VAGH resin, which is a vinyl chloride-vinyl acetate-vinyl alcohol terpolymer. Formulation examples 2 and 12 include the acrylic acid/methyl methacrylate copolymer ACRYLOID B48M and a naphthenic acid. Formulation 12 does not contain wood rosin and is therefore a comparative example.

WO 2011/151438 describes a binder for an antifouling composition comprising (a) a monofunctional acid; (b) a polyfunctional acid having a molecular weight of 300 to less than 1000; and (iii) a metal compound.

The inventors have now unexpectedly established that a coating composition having the features of claim 1, inter alia a (meth)acrylate binder, a rosin, a liquid, C12-C24 monocarboxylic acid component and a biocide, are effective antifouling coating compositions which exhibit reduced thickness of the leached layer. Furthermore, reduced thickness of the leached layer is achieved whilst maintaining or even reducing paint viscosity at a given VOC (volatile organic compounds) content. This makes it possible to make antifouling paints having higher volume solids and lower level of VOC. This results in improved paint manufacturing efficiency and an improved application process and reduced environmental impact.

### Summary of Invention

Viewed from a first aspect the invention provides a marine antifouling coating composition comprising:
(i) an acrylic binder comprising at least one polymer comprising (meth)acrylate and/or silyl (meth)acrylate monomers;
(ii) one or more rosins or derivatives thereof;
(iii) one or more marine antifouling agents; and
(iv) one or more monocarboxylic acids selected from liquid, acyclic, saturated C12-C24 monocarboxylic acids or a salt thereof or liquid, acyclic, branched C12-C24 monocarboxylic acids or a salt thereof, wherein the monocarboxylic acid is in liquid form at 23 °C and ambient pressure (1 atm) and wherein the degree of branching of component (iv) is greater than 70 wt% and wherein the ratio of component (ii):(iv) on a dry weight basis is in the range of 90:10 to 40:60.

Viewed from another aspect the invention provides a marine antifouling coating composition comprising:
(i) at least 5 wt% of an acrylic binder comprising at least one polymer comprising (meth)acrylate and/or silyl (meth)acrylate monomers;
(ii) one or more rosins or derivatives thereof;
(iii) one or more marine antifouling agents; and
(iv) one or more monocarboxylic acids selected from liquid, acyclic, saturated C12-C24 monocarboxylic acids or a salt thereof or liquid, acyclic, branched C12-C24 monocarboxylic acids or a salt thereof, wherein the monocarboxylic acid is in liquid form at 23 °C and ambient pressure (1 atm) and wherein the degree of branching of component (iv) is greater than 70 wt% and wherein the ratio of component (ii):(iv) on a dry weight basis is in the range of 90:10 to 40:60.

In one embodiment component (iv) is present in an amount of 0.5 to 10 wt% of the composition.

In one embodiment component (iv) is a C14-C20 monocarboxylic acid or a salt thereof, such as C16-C20 monocarboxylic acid or a salt thereof.

In a further embodiment the monocarboxylic acid is at least one selected from isopalmitic acid or isostearic acid.

In a further embodiment the rosin is gum rosin or a derivative thereof.

In a further embodiment the component (ii) is present in an amount of 2.5 to 20 wt% of the composition.

In a further embodiment the acrylic binder component (i) comprises at least one polymer comprising at least one of the following monomers: (meth)acrylic acid, methyl methacrylate, 2-methoxyethyl (meth)acrylate, n-butyl (meth)acrylate, 2-(2-ethoxyethoxy)ethyl (meth)acrylate, tetrahydrofurfuryl acrylate and triisopropylsilyl (meth)acrylate.

In a further embodiment the component (i) is present in an amount of 0.5 to 20 wt% of the composition.

In a further embodiment the marine antifouling agent (iii) comprises at least one of cuprous oxide, copper pyrithione or zineb.

In a further embodiment the antifouling coating composition has a VOC of less than 400 g/L.

Viewed from another aspect the invention provides a process for protecting an object from fouling comprising coating at least a part of said object which is subject to fouling with an antifouling coating composition as hereinbefore described.

Viewed from another aspect the invention provides an object coated with an antifouling coating composition as hereinbefore defined.

Viewed from another aspect the invention provides the use of one or more monocarboxylic acids selected from liquid, acyclic, saturated C12-C24 monocarboxylic acids or a salt thereof or liquid, acyclic, branched C12-C24 monocarboxylic acids or a salt thereof as hereinbefore defined to reduce the leached layer formation in a marine coating composition comprising:
(i) an acrylic binder comprising at least one polymer comprising (meth)acrylate and/or silyl (meth)acrylate monomers;
(ii) rosin and/or derivatives thereof; and
(iii) a marine antifouling agent, and

wherein the monocarboxylic acid is in liquid form at 23 °C and ambient pressure (1 atm) and wherein the degree of branching of component (iv) is greater than 70 wt%
and wherein the ratio of component (ii):(iv) on a dry weight basis is in the range of 90:10 to 40:60.

### Definitions

The following terminology is used throughout unless context allows otherwise.

The term (meth)acrylic acid means acrylic acid or methacrylic acid.

The term (meth)acrylate covers methacrylate or acrylate.

The term liquid means that the monocarboxylic acid is in liquid form at 23°C and ambient pressure (1 atm).

The term "marine antifouling agent" refers to a compound or mixtures of compounds that prevents the settlement of marine organisms on a surface, and/or prevents the growth of marine organisms on a surface and/or encourages the dislodgement of marine organisms from a surface.

Percentages of components may be calculated as dry solids. This means that the weight contribution of any solvents in the coating is ignored. Weight percentages are however generally quoted assuming solvent is present where no reference to dry solids is made.

### Detailed Description of the Invention

The antifouling coating composition of the invention comprises at least the four components (i)-(iv) as hereinbefore defined: an acrylic binder (i), a rosin or derivative thereof (ii), a marine antifouling agent (iii), and one or more monocarboxylic acids (iv) or a salt thereof. All embodiments of the monocarboxylic acids discussed herein also apply to the salt version of the acid. It will however be preferred if the monocarboxylic acid is used in its free acid form.

### Component (i) - Acrylic binder

The purpose of the binder is to bind the components of the composition together. Subsequently, when the composition is applied on a surface, the binder gradually degrades or dissolves which will lead to the release of the biocides and thereby prevents fouling of the surface by marine organisms.

Component (i) is a homopolymer or copolymer which is prepared through the polymerisation of at least one monomer selected from: a (meth)acrylic acid, a (meth)acrylate and/or a silyl (meth)acrylate. It is preferably a copolymer comprising at least two monomers which are selected from a (meth)acrylic acid, a (meth)acrylate and/or a silyl (meth)acrylate.

Preferred acrylic binders of the invention comprise the residues of at least one monomer, and preferably at least two monomers, of formula (III): 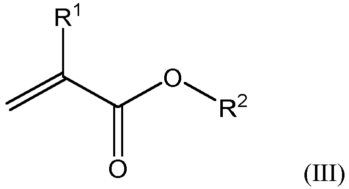 wherein R¹ is H or CH₃;
R² is H, -(CH₂CH₍₂₋ₐ₎[CH₃]ₐO)ₙR³, benzyl, C5-C10 cycloalkyl, and optionally substituted C1-C18 alkyl, wherein said substituents are selected from OH, heterocyclyl, and XR⁴;
R³ is selected from H, C1-C8 alkyl, C5-C10 cycloalkyl or phenyl;
R⁴ is C1-C6 alkyl;
X is a heteroatom, preferably O;
a is 0 or 1; and
n is an integer from 1 to 20, preferably from 1 to 6.

Alkyl groups may be linear or branched. Preferred alkyl groups comprise 1-10 carbon atoms. Preferred cycloalkyl groups comprise 5 to 10 carbon atoms. Cycloalkyl groups may be a bridged or contain a polycyclic ring system. Preferred cycloalkyl groups are monocyclic.

The heterocyclyl is preferably a 3- to 10-membered ring or ring system and more particularly a 5- or 6-membered ring, which may be saturated or unsaturated. Preferably the heterocyclyl is saturated. The preferred heteroatom is oxygen. A representative example of an alkyl substituted with heterocyclyl group that may be present is tetrahydrofuryl.

If an optional substituent is present, there is preferably one such substituent.

Examples of monomers present in the acrylic binder of the present invention include (meth)acrylic acid, methyl (meth)acrylate, ethyl (meth)acrylate, tert-butyl (meth)acrylate, n-butyl (meth)acrylate, isobutyl (meth)acrylate, hexyl (meth)acrylate, 2-ethylhexyl (meth)acrylate, n-octyl (meth)acrylate, isooctyl (meth)acrylate, trimethylhexyl (meth)acrylate, decyl (meth)acrylate, isodecyl (meth)acrylate, dodecyl (meth)acrylate, tridecyl (meth)acrylate, isotridecyl (meth)acrylate, octadecyl (meth)acrylate, cyclohexyl (meth)acrylate, isobornyl (meth)acrylate, benzyl (meth)acrylate, 2-hydroxyethyl (meth)acrylate, hydroxypropyl (meth)acrylate, hydroxybutyl (meth)acrylate, poly(ethylene glycol) (meth)acrylate, polypropylene glycol) (meth)acrylate, 2-methoxyethyl (meth)acrylate, 2-butoxyethyl (meth)acrylate, 2-(2-ethoxyethoxy)ethyl (meth)acrylate, tri(ethylene glycol) ethyl ether (meth)acrylate, poly(ethylene glycol) methyl ether (meth)acrylate, glycidyl (meth)acrylate, tetrahydrofurfuryl (meth)acrylate and isopropylidene glycerol (meth)acrylate.

In a preferred embodiment, the monomer is of formula (IIIa): 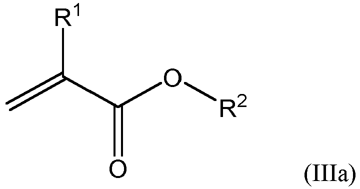
wherein R¹ is H or CH₃;
R² is H, -(CH₂CH₂O)ₙR³, tetrahydrofurfuryl or optionally substituted C1-C18 alkyl, wherein said substituents are selected from -OR⁴,
R³ is selected from H, C1-C8 alkyl;
R⁴ is C1-C6 alkyl; and
n is an integer from 1 to 20, preferably from 1 to 6.

Preferred (meth)acrylate monomers of formula (III) are those of formula (I) 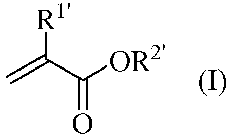 wherein R^{1'} is H or CH₃, and R^{2'} is H or a linear or branched C1-C10 alkyl, preferably a linear C1-10 alkyl group, or a linear C2-C10 alkyl group containing 1-4 heteroatoms.

R^{2'} is more especially a linear C1-6 alkyl group or the group R^{2'} may be a linear C2-C10 containing 1 to 3 heteroatoms, especially 1-2 heteroatoms, especially 1 heteroatom. The heteroatom is preferably O. In one embodiment R^{2'} is a linear C2-C8 alkyl group containing 1-3 oxygen heteroatoms in the carbon chain. R^{2'} is most especially C1-4 alkyl, a linear C2-C8 alkyl group containing 1-3 oxygen heteroatoms. Alternatively R^{2'} can be H.

Particularly preferred monomers are: (meth)acrylic acid, methyl methacrylate, 2-methoxyethyl (meth)acrylate, n-butyl (meth)acrylate, 2-ethylhexyl (meth)acrylate, 2-(2-ethoxyethoxy)ethyl (meth)acrylate, and tetrahydrofurfuryl (meth)acrylate. Especially preferred monomers are: methacrylic acid, methyl methacrylate, n-butyl acrylate, n-butyl methacrylate, 2-ethylhexyl acrylate, 2-methoxyethyl acrylate, 2-methoxyethyl methacrylate,2-(2-ethoxyethoxy)ethyl acrylate and tetrahydrofurfuryl acrylate.

Particularly preferably the monomers present in the acrylic binder of the invention are selected from methacrylic acid, methyl methacrylate, n-butyl acrylate, n-butyl methacrylate, 2-ethylhexyl acrylate, 2-methoxyethyl acrylate, 2-methoxyethyl methacrylate and tetrahydrofurfuryl acrylate .

In a further preferred embodiment, the binder of the present invention comprises one or more monomers as defined by the general formula (III) in the amount of 10-100 % by weight of the total mixture of monomers, more preferably 40-90 % by weight, most preferably 50-85% by weight.

In further embodiment, suitable monomers for use in the acrylic binder include silyl (meth)acrylate monomers.

In a preferred embodiment, the acrylic binder polymer of the invention comprises the residue of at least one monomer of formula (IV) 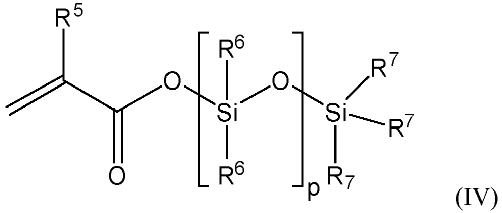 wherein
R⁵ is H or CH₃;
R⁶ are each independently selected from linear or branched C₁₋₄ alkyl groups;
R⁷ are each independently selected from the group consisting of linear or branched C₁₋₂₀ alkyl groups, C₃₋₁₂ cycloalkyl groups, C₆₋₂₀ aryl groups and -OSi(R⁸)₃ groups;
each R⁸ is independently a linear or branched C₁₋₄ alkyl group; and
   p is an integer from 0 to 5.

The term "alkyl" is intended to cover both linear or branched alkyl groups such as methyl, ethyl, propyl, and butyl. Particularly preferred cycloalkyl groups include cyclohexyl and substituted cyclohexyl.

Examples of the substituted aryl groups include phenyl.

In a further preferred embodiment, the binder of the present invention comprises one or more monomers having silyl ester functionality as defined by the general formula (IV) in the amount of 1-80 % by weight of the total mixture of monomers, more preferably 20-70 % by weight, most preferably 40-65% by weight.

Examples of silyl (meth) acrylate monomers as defined by the general formula (IV) include:
triisopropylsilyl (meth)acrylate, tri-n-butylsilyl (meth)acrylate, triisobutyl silyl (meth)acrylate, tri-tert-butyl silyl (meth)acrylate, tri-sec-butylsilyl (meth)acrylate, tert-butyldimethylsilyl (meth)acrylate, thexyldimethylsilyl (meth)acrylate, tert-butyldiphenylsilyl (meth)acrylate, 1,1,3,3,5,5,7,7,7-nonamethyl-1--tetrasiloxanyl_(meth)acrylate, bis(trimethylsiloxy)methylsilyl (meth)acrylate, tris(trimethylsiloxy)silyl (meth)acrylate_and others as described in WO2014/064048.

Preferred silyl (meth)acrylate monomers are of formula (II) 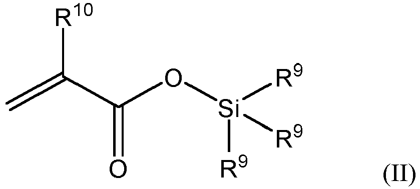 wherein R¹⁰ is H or CH₃, and R⁹ are each independently linear or branched C1-C10 alkyl, preferably a linear or branched C1-C6 alkyl group, or phenyl.

Preferred monomers are alkylsilyl (meth)acrylates and more preferably trialkylsilyl (meth)acrylates, wherein one or more of the alkyl group(s) is branched. Particularly preferred monomers include triisopropylsilyl (meth)acrylate, triisobutyl silyl (meth)acrylate, thexyldimethylsilyl (meth)acrylate and tert-butyldiphenylsilyl (meth)acrylate. Triisopropyl silyl acrylate and triisopropylsilyl methacrylate are particularly preferred.

Component (i) is preferably a copolymer of two or more monomers. In one embodiment, the acrylic binder is free of any silyl groups. In another embodiment, the acrylic binder is a copolymer of one or more silyl (meth)acrylate monomers and one or more (meth)acrylate monomers. In another embodiment, the acrylic binder is a copolymer of one silyl (meth)acrylate monomer and two or more (meth)acrylate monomers. Preferred monomers are of formula (I) and/or (II). The use of a copolymer based on triisopropylsilyl acrylate or triisopropyl silyl methacrylate and at least one monomer of formula (IIIa) is especially preferred.

Particularly preferred binders are polymers of one or more, such as two or more, monomers selected from:
methyl methacrylate, n-butyl acrylate, n-butyl methacrylate, 2-ethylhexyl acrylate and methacrylic acid;
methyl methacrylate, n-butyl acrylate, n-butyl methacrylate, 2-ethylhexyl acrylate and 2-(2-ethoxyethoxy)ethyl acrylate;
methyl methacrylate, n-butyl acrylate, n-butyl methacrylate, 2-ethylhexyl acrylate, 2-methoxyethyl acrylate and 2-methoxyethyl methacrylate;
methyl methacrylate, , n-butyl acrylate, n-butyl methacrylate, 2-methoxyethyl acrylate, 2-methoxyethyl methacrylate, 2-(2-ethoxyethoxy)ethyl acrylate, tetrahydrofurfuryl acrylate, triisopropylsilyl acrylate and triisopropylsilyl methacrylate.

It is preferred if the acrylic binder does not contain a cyclic amide monomer, in particular one in which the cyclic amide monomer contains a ring of structure A-CONR-A where the two A groups together form an optionally substituted ring encompassing the CONR link and R is H, alkyl or alkenyl.

It is preferred if the binder (i) consists of a copolymer of two or more monomers units of formula (I), or consists of a copolymer of monomer units of formulae (I) and (II).

Suitable acrylic polymers may be prepared using polymerization reactions known in the art, such as addition polymerization or chain growth polymerization. Examples of suitable addition polymerization techniques include free-radical polymerization, anionic polymerization and adequate controlled polymerization techniques. The acrylic polymer may, for example, be obtained by polymerizing a monomer mixture in the presence of a polymerization initiator by any of various methods such as solution polymerization, bulk polymerization, emulsion polymerization, and suspension polymerization in a conventional manner. When preparing a coating composition using the acrylic polymer as hereinbefore described, the polymer is preferably diluted with an organic solvent to give a polymer solution having an appropriate viscosity. From this standpoint, it is desirable to employ solution polymerization to prepare the acrylic polymer.

Examples of suitable free-radical polymerization initiators include azo compounds such as dimethyl 2,2'-azobis(2-methylpropionate), 2,2'-azobis(2-methylbutyronitrile), 2,2'-azobis(isobutyronitrile) and 1,1'-azobis(cyanocyclohexane) and peroxides such as tert-butyl peroxypivalate, tert-butyl peroxy-2-ethylhexanoate, tert-butyl peroxydiethylacetate, tert-butyl peroxyisobutyrate, di-tert-butyl peroxide, tert-butyl peroxybenozate, and tert-butyl peroxyisopropylcarbonate, tert-amyl peroxypivalate, tert-amyl peroxy-2-ethylhexanoate, 1,1-di(tert-amyl peroxy)cyclohexane and dibenzoyl peroxide. These compounds may be used alone or as a mixture of two or more thereof.

Examples of suitable organic solvent include aromatic hydrocarbons such as xylene, toluene, mesitylene; ketones such as methyl ethyl ketone, methyl isobutyl ketone, methyl isoamyl ketone, cyclopentanone, cyclohexanone; esters such as butyl acetate, tert-butyl acetate, amyl acetate, ethylene glycol methyl ether acetate; ethers such as ethylene glycol dimethyl ether, diethylene glycol dimethyl ether, dibutyl ether, dioxane, tetrahydrofuran, alcohols such as n-butanol, isobutanol, benzyl alcohol; ether alcohols such as butoxyethanol, 1-methoxy-2-propanol; aliphatic hydrocarbons such as white spirit; and optionally a mixture of two or more solvents. These compounds are used alone or as a mixture of two or more thereof.

The acrylic binder component (i) may comprise one polymer or a mixture of two or more polymers as previously defined.

The thus-obtained acrylic binder desirably has a weightaverage molecular weight (Mw) of from 3,000 to 100,000, preferably 10,000 to 50,000. Typically number average molecular weight (Mn) values are 1,500 to 25,000 such as 2,000 to 15,000. The solution of the polymer desirably has a viscosity of 50 P or lower, preferably 20 P or lower at 23°C, e.g. 10 P or lower (according to ASTM D2196-10 using a Brookfield DV-1 viscometer with LV-2 or LV-4 spindle at 12 rpm). The polymer solution is desirably regulated so as to have a solid content of from 5 to 90 wt%, preferably from 15 to 85wt%, more preferably from 40 to 75wt%.

The acrylic binder component (i) is preferably present in an amount of 5.0 to 40 wt% on a dry weight basis, preferably 5.0 to 30 wt%, especially 10 to 25 wt% in the coating composition as a whole.

The acrylic binder component (i) is preferably present in an amount of 2.0 to 30 wt%, preferably 5.0 to 30 wt%, especially 7.5 to 25 wt% in total in the composition.

Where component (i) is a mixture of acrylic binders, the above weight percentages and ratios refer to the combined total of acrylic binders.

### Component (ii) - Rosin component

The use of rosins in binder systems is well established. The term "rosin" is a generic term for a plant resin extract which has been heated to vaporize any volatile components. The major constituents of rosin are resin acids, especially abietic acid. Rosin acids are typically cyclic.

Rosin can be used to adjust the self-polishing properties and the mechanical properties of the antifouling coating. Antifouling coating compositions of the invention preferably comprise at least 0.25 wt% rosin, such as at least 1.0 wt%.

The rosin of use in the invention can be a rosin or derivative thereof such as a salt thereof e.g. as described below.

Examples of rosin acids include gum rosin, wood rosin, tall oil rosin, abietic acid, neoabietic acid, dehydroabietic acid, dihydroabietic acid, palustric acid, levopimaric acid, pimaric acid, isopimaric acid, sandaracopimaric acid, communic acid, mercusic acid, secodehydroabietic acid; and sandarac resin containing sandaracopimaric acid, dihydroagathalic acid, dihydroagatholic acid, methyl pinifolic acid, communic acid and dihydroagathic acid.

Preferably the rosin present comprises rosin acids selected from abietic acid, neoabietic acid, dehydroabietic acid, dihydroabietic acid, tetrahydroabietic acid, secodehydroabietic acid, pimaric acid, isopimaric acid, levopimaric acid, palustric acid, sandaracopimaric acid, communic acid and derivatives thereof.

Rosin derivatives which may be used in the invention include hydrogenated and partially hydrogenated rosin, disproportionated rosin, dimerised rosin, polymerised rosin, maleic acid esters, fumaric acid esters, glycerol esters, methyl esters, pentaerythritol esters and other esters of rosin and hydrogenated rosin, and metal salts of the rosin such as copper rosinate, zinc rosinate, calcium rosinate, magnesium rosinate and other metal rosinates of rosin and polymerised rosin and others as described in WO 97/44401.

Preferably the rosin or rosin derivative present in the antifouling coating composition of the present invention is a gum rosin.

The antifouling composition as a whole preferably comprises 0.5 to 30 wt% (dry solids) of a rosin material, preferably 0.5 to 20 wt%, more preferably 1.0 to 15 wt% (dry solids).

The antifouling composition as a whole preferably comprises 0.25 to 20 wt% of a rosin material, preferably 0.5 to 15 wt% in total.

The wt ratio of component (i):(ii) on a dry weight basis is preferably in the range of 95:5 to 50:50.

The wt ratio of component (ii):(iv) on a dry weight basis is in the range of 90:10 to 40:60. In some embodiments component (ii) is preferably in excess relative to component (iv), i.e. the wt ratio of components (ii):(iv) is >50:50.

Where component (ii) is a mixture of rosins or rosin derivatives, the above weight percentages and ratios refer to the combined total of such components.

### Component (iii) - Marine antifouling agent

Component (iii) is a marine antifouling agent. The terms antifouling agent, biologically active compound, antifoulant, biocide, toxicant are used in the industry to describe known compounds that act to prevent marine fouling on a surface. The antifouling agents of the invention are marine antifouling agents. Examples of inorganic marine antifouling agents include copper and copper compounds such as copper oxides, e.g. cuprous oxide and cupric oxide; copper alloys, e.g. copper-nickel alloys; copper salts, e.g. copper thiocyanate, copper sulphide; and barium metaborate.

The cuprous oxide material has a typical particle diameter distribution of 0.1-70 µm and an average particle size (d50) of 1-25 µm. The cuprous oxide material may contain a stabilizing agent to prevent surface oxidation and caking. Examples of commercial available cuprous oxide include Nordox Cuprous Oxide Red Paint Grade, Nordox XI,T from Nordox AS, Cuprous oxide from Furukawa Chemicals Co., Ltd.; Red Copp 97N, Purple Copp, Lolo Tint 97N, Chemet CDC, Chemet LD from American Chemet Corporation; Cuprous Oxide Red from Spiess-Urania; Cuprous oxide Roast, Cuprous oxide Electrolytic fromTaixing Smelting Plant Co., Ltd.

Examples of organometallic marine antifouling agents include zinc 2-pyridinethiol-1-oxide [zinc pyrithione]; organocopper compounds such as copper 2-pyridinethiol-1-oxide [copper pyrithione], copper acetate, copper naphthenate, copper 8-quinolinonate [oxine-copper], copper nonylphenolsulfonate, copper bis(ethylenediamine)bis(dodecylbenzensulfonate) and copper bis(pentachlorophenolate); dithiocarbamate compounds such as zinc bis(dimethyldithiocarbamate) [ziram], zinc ethylenebis(dithiocarbamate) [zineb], manganese ethylenebis(dithiocarbamate) [maneb] and manganese ethylenebis(dithiocarbamate) complexed with zinc salt [mancozeb].

Examples of organic marine antifouling agents include heterocyclic compounds such as 2-(*tert*-butylamino)-4-(cyclopropylamino)-6-(methylthio)-1,3,5-triazine [cybutryne], 4,5-dichloro-2-n-octyl-4-isothiazolin-3-one, 1,2-benzisothiazolin-3-one [DCOIT], 2-(thiocyanatomethylthio)-1,3-benzothiazole [benthiazole], 3-benzo[b]thien-2-yl-5,6-dihydro-1,4,2-oxathiazine 4-oxide [bethoxazin] and 2,3,5,6-tetrachloro-4-(methylsulphonyl)pyridine; urea derivatives such as 3-(3,4-dichlorophenyl)-1,1-dimethylurea [diuron]; amides and imides of carboxylic acids, sulphonic acids and sulphenic acids such as *N-*(dichlorofluoromethylthio)phthalimide, *N-*dichlorofluoromethylthio-*N',N'*-dimethyl-*N*-phenylsulfamide [dichlofluanid], *N*-dichlorofluoromethylthio-*N',N'*-dimethyl-*N-p*-tolylsulfamide [tolylfluanid] and *N-*(2,4,6-trichlorophenyl)maleimide; other organic compounds such as pyridine triphenylborane, amine triphenylborane, 3-iodo-2-propynyl *N*-butylcarbamate [iodocarb], 2,4,5,6-tetrachloroisophthalonitrile [chlorothalonil], *p*-((diiodomethyl)sulphonyl)toluene and 4-bromo-2-(4-chlorophenyl)-5-(trifluoromethyl)-1H-pyrrole-3-carbonitrile [tralopyril].

Other examples of marine antifouling agents may be tetraalkylphosphonium halogenides, guanidine derivatives, imidazole containing compounds such as 4-[1-(2,3-dimethylphenyl)ethyl]-1H-imidazole [medetomidine] and derivatives, macrocyclic lactones including avermectins and derivatives thereof such as ivermectine, spinosyns and derivatives thereof such as spinosad, capsaicin and derivatives thereof such as phenylcapsaicin, and enzymes such as oxidase, proteolytically, hemicellulolytically, cellulolytically, lipolytically and amylolytically active enzymes.

Preferred antifouling agents are cuprous oxide, copper thiocyanate, zinc pyrithione, copper pyrithione, zinc ethylenebis(dithiocarbamate) [zineb], 2-(tert-butylamino)-4-(cyclopropylamino)-6-(methylthio)-1,3,5-triazine [cybutryne], 4,5-dichloro-2-n-octyl-4-isothiazolin-3-one [DCOIT], N-dichlorofluoromethylthio-N',N'-dimethyl-N-phenylsulfamide [dichlofluanid], N-dichlorofluoro methylthio-N',N'-dimethyl-N-p-tolylsulfamide [tolylfluanid], 4-[1-(2,3-dimethylphenyl)ethyl]-1H-imidazole [medetomidine] and 4-bromo-2-(4-chlorophenyl)-5-(trifluoromethyl)-1H-pyrrole-3-carbonitrile [tralopyril].

Especially preferred antifouling agents are cuprous oxide, copper thiocyanate, zinc pyrithione, copper pyrithione, zinc ethylenebis(dithiocarbamate) [zineb], 4,5-dichloro-2-n-octyl-4-isothiazolin-3 -one [DCOIT], 4-[1-(2,3-dimethylphenyl)ethyl]-1H-imidazole [medetomidine] and 4-bromo-2-(4-chlorophenyl)-5-(trifluoromethyl)-1H-pyrrole-3-carbonitrile [tralopyril].

The marine antifouling agents may be used alone or as mixtures as different antifouling agents operate against different marine fouling organisms. Mixtures of antifouling agents are generally preferred. One preferred mixture of antifouling agents is active against marine invertebrates, such as barnacles, tubeworms, bryozoans and hydroids; and plants, such as algae (seaweed and diatoms); and bacteria. The use of these marine antifouling agents is known in antifouling coatings and their use would be familiar to the skilled person.

In one embodiment of the invention it is preferred that the antifouling agent includes a copper-containing biocide. Such compositions preferably comprise a combination of cuprous oxide and/or copper thiocyanate and one or more agents selected from copper pyrithione, zinc ethylenebis(dithiocarbamate) and 4,5-dichloro-2-octyl-4-isothiazolin-3-one.

In another embodiment of the invention the antifouling coating composition is free of an inorganic copper antifouling agent. Such compositions preferably comprise a combination of 4-bromo-2-(4-chlorophenyl)-5-(trifluoromethyl)-1H-pyrrole-3-carbonitrile and/or medetomidine and one or more agents selected from zinc pyrithione, zinc ethylenebis(dithiocarbamate) and 4,5-dichloro-2-octyl-4-isothiazolin-3-one. The total amount of marine antifouling agent(s) in the antifouling compositions of the invention (on a dry weight basis) is preferably in the range of 0.1 to 70 wt%, such as 5 to 55 wt%, especially 15 to 50 wt%. These higher amounts are particularly suitable where cuprous oxide is included as part (or all) of the component (iii).

The amount of marine antifouling agent(s) in the antifouling compositions of the invention is preferably in the range of 20 to 60 wt%, such as 20 to 55 wt%, especially 20 to 50 wt% (i.e. when solvent is also present). These amounts are particularly suitable where cuprous oxide is included as part (or all) of the component (iii).

It will be appreciated that the amount of component (iii) will vary depending on the end use and the marine antifouling agent(s) used. Where an inorganic copper compound is avoided the amount (wt%) of antifouling agent required is much less.

The amount of marine antifouling agent(s) in the antifouling compositions of the invention which is substantially free of an inorganic copper compound is preferably in the range of 0.1 to 20 wt%, such as 0.2 to 15 wt% (dry solids).

The amount of marine antifouling agent(s) in the antifouling compositions of the invention which is substantially free of an inorganic copper compound is preferably in the range of 0.1 to 30 wt%, such as 0.2 to 20 wt%.

Where component (iii) is a mixture of antifouling agents, the above weight percentages and ratios refer to the combined weight total of antifouling agents.

Optionally the marine antifouling agents may be encapsulated or adsorbed on an inert carrier or bonded to other materials for controlled release. These percentages refer to the amount of active antifouling agent present and not therefore to any carrier used.

### Component (iv) - Monocarboxylic acid

Component (iv) is a liquid C12-C24 monocarboxylic acid or a salt thereof, i.e. an acid containing a single -COOH moiety within the molecule or its salt. Such acids contain an acid "head group" and a non-polar "tail group" which is preferably a branched chain of carbon atoms. The monocarboxylic acid preferably contains C, H and O atoms only.

The inventors have established that by appropriate choice of acid, in combination with the presence of a rosin as described in the preceding section, it is possible to obtain an antifouling composition with improved control of the leached layer formation (reduced thickness) than a comparative composition not containing the acid component (iv). Furthermore, compositions containing the acid component show similar levels of polishing while maintaining or even reducing the viscosity of the paint.

Component (iv) may comprise one or more monocarboxylic acids selected from liquid, acyclic, saturated C12-C24 monocarboxylic acids or liquid, acyclic, branched C12-C24 monocarboxylic acids. The acid should not therefore be a linear unsaturated carboxylic acid. It is preferred if the acid is saturated.

The monocarboxylic acid is ideally of formula R¹¹COOH where R¹¹ is a C1 1-23 acyclic, branched alkyl or alkenyl group or a C1 1-23 acyclic, saturated, linear or branched alkyl group. It is preferred if R¹¹ is a C11-23 acyclic, branched alkyl group.

Most preferably, the monocarboxylic acid is a branched C12-24 fatty acid or mixture thereof.

The acid is a liquid at room temperature and pressure (23 °C and 1 atm). Where mixtures of acids are used, it is the mixture which must be a liquid at room temperature and pressure (23 °C and 1 atm). It will be appreciated that rosin is a solid at room temperature and hence component (iv) cannot be a rosin.

The acid component is branched. A branched acid must contain a tertiary or quaternary carbon atom in its tail group. It will be appreciated that many of the acids used in the invention may be derived from natural sources, in which case in isolated form they typically exist as a mixture of acids of differing chain lengths with varying degrees of branching. Where the acid used is a mixture of components, the acid has a degree of branching of greater than 70%, preferably greater than 80% or even greater than 90%. The percentage here is wt%. By way of example, a C18 acid component having a degree of branching of at least 50% will contain no more than 50% of linear C18 acids (n-stearic acid acid, n-oleic acid, n-linoleic acid etc..), with the remainder being branched C18 acids (generically "isostearic acid", "isooleic acid", "isolinoleic acid" etc.).

In a preferred aspect the acid is a C14-C20 monocarboxylic acid, preferably a C16-C20 monocarboxylic acid, especially C16-18 monocarboxylic acid. It is preferred if carbon chains contain an even number of carbon atoms. In a preferred aspect, the acid has a molecular weight of below 350 g/mol, especially below 320 g/mol, and particularly below 300 g/mol.

In a preferred aspect the acid has an acid number below 310, especially below 290, such as below 250 or even below 230. "Acid number" is a well known parameter, and is the mass of KOH in milligrams that is required to neutralize one gram of the acid (ISO 660:2009).

In a preferred aspect the acid has an iodine number of below 50, such as below 40, below 30, or below 20. In some embodiments the acid may be a saturated acid having an iodine number of 0. "Iodine number" is a well known parameter, and is the mass of iodine in grams that reacts with 100 grams of the acid (AOCS Tg 1a-64).

Particularly preferred acids for use in the invention include one or more selected from the group consisting of: isopalmitic acid or isostearic acid or mixtures thereof. In each case the acid may be natural or synthetic. A blend of isostearic acid and isopalmitic acid is available in a suitable degree of branching under the name Radiacid 0906, Radiacid 0907 and Radiacid 0909 from Oleon. A particularly high grade of branched isostearic acid is the product "Isostearic acid N" from Nissan Chemicals.

Particularly preferred acids are isostearic acid and isopalmitic acid, in each case having a degree of branching greater than 70% and an iodine number of below 30. Particularly suitable components are the products Isostearic acid N from Nissan Chemicals, and Radiacid 0906, 0907 or 0909 from Oleon.

Isostearic or isopalmitic acid can have different degrees of branching. More highly branched isostearic acids give a very low melting point. 16-Methylheptadecanoic acid with CAS No. 2724-58-5 has a low degree of branching and has a much higher melting point. Many commercial (technical) isostearic acids are liquids since they are mixtures of isostearic acids (branched C18 acids) with different degree of branching. Isostearic acids of use in the presence invention include those under CAS-No 30399-84-9.

Isopalmitic acids of use in the presence invention include those under CAS-No 25354-97-6.

Where component (iv) is a mixture of acids, the above weight percentages and ratios refer to the combined total of acids. However these proportions do not include the rosin component (ii).

It will be appreciated that any acid can form a salt if there are metal ions present. Whilst the inventors suggest adding the acid in its acid form, it is also possible to add the acid in its salt form. Preferred acid salts are Cu and Zn salts. It is also preferred that the antifouling composition is substantially free of silver salts of the monocarboxylic acid. By substantially free it is meant that the antifouling composition comprises less than 1000 ppm of silver salts of acid, preferably less than 500 ppm. Most preferably the antifouling composition is completely free of silver salts of the monocarboxylic acid. The acid may also convert into a salt form in the composition. The wt% of acid added/in the composition should be calculated assuming that the acid is in its acid form. Where the acid salt is used as component (iv) of the composition, it is the corresponding free acid of the salt which must be liquid at 23 °C and 1 atm.

In the present invention, the antifouling composition as a whole preferably comprises 0.25 to 7.5 wt%, preferably 0.5 to 7.0 wt% of a component (iv), preferably 0.5 to 5.0 wt%, such as 0.75 to 3.0 wt%.

Thus, viewed from another aspect the invention provides a marine antifouling coating composition as herein defined comprising:
(i) 5.0 to 40 wt% of acrylic binder;
(ii) 0.5 to 30 wt% of rosin or derivative thereof;
(iii) 0.5 to 70 wt% of marine antifouling agent component; and
(iv) 0.5 to 10 wt% of monocarboxylic acid component.

In a further embodiment, it is envisaged that the monocarboxylic acid component (iv) can completely replace the rosin component. Viewed from another aspect, the invention provides a marine antifouling coating composition free from rosin or a derivative thereof comprising:
(i) an acrylic binder comprising at least one polymer comprising (meth)acrylate and/or silyl (meth)acrylate monomer;
(iii) one or more marine antifouling agents; and
(iv) one or more monocarboxylic acids selected from liquid, acyclic, saturated C12-C24 monocarboxylic acids or liquid, acyclic, branched C12-C24 monocarboxylic acids, wherein the monocarboxylic acid is in liquid form at 23 °C and ambient pressure (1 atm) and wherein the degree of branching of component (iv) is greater than 70 wt% and wherein the ratio of component (ii):(iv) on a dry weight basis is in the range of 90:10 to 40:60.

The preferred limitations above apply to this embodiment.

### Other Composition components

The antifouling coating composition of the invention should preferably have a solids content above 45 wt%, e.g. above 50 wt%, such as above 60 wt%. In some embodiments the solids content may be above 75 wt%, such as above 80 wt%.

Preferably the antifouling coating composition of the invention should have a content of volatile organic compounds (VOC) less than 420 g/L, more preferably less than 400 g/L, such as less than 380 g/L, especially less than 350 g/L. VOC content can be calculated (ASTM D5201-01) or measured (EPA method 24).

The antifouling coating composition according to the present invention optionally comprises one or more components selected among other binders, pigments, extenders and fillers, stabilizers, dehydrating agents and drying agents, additives, solvents and thinners.

An additional binder can be used to adjust the self-polishing properties and the mechanical properties of the antifouling coating film. Examples of binders that can be used in addition to the binder (i) in the antifouling coating composition according to the present invention include hydrocarbon resins, aliphatic, aromatic or dicyclopentadiene based hydrocarbon resins;
acid functional polymers of which the acid group is blocked with divalent metals bonded to a monovalent organic residue, or divalent metals bonded to a hydroxyl residue;
hydrophilic copolymers for example poly(N-vinyl pyrrolidone) copolymers;
vinyl ether polymers and copolymers, such as poly(methyl vinyl ether), poly(ethyl vinyl ether), poly(isobutyl vinyl ether), poly(vinyl chloride-co-isobutyl vinyl ether);
aliphatic polyesters, such as poly(lactic acid), poly(glycolic acid), poly(2-hydroxybutyric acid), poly(3-hydroxybutyric acid), poly(4-hydroxyvaleric acid), polycaprolactone and aliphatic polyester copolymer containing two or more of the units selected from the above mentioned units; metal containing polyesters; and polyoxalates. It is however preferred if the binder is formed only from acrylic polymers according to the invention (and the rosin component).

The antifouling coating composition of the present invention optionally comprises a dehydrating agent, also referred to as water scavenger or drying agent. Preferably the dehydrating agent is a compound which removes water from the composition in which it is present. Dehydrating agents improve the storage stability of the antifouling coating composition by removing moisture introduced from raw materials, such as pigments and solvents, or water formed by reaction between carboxylic acid compounds and bivalent and trivalent metal compounds in the antifouling coating composition. The dehydrating agents and desiccants that may be used in the antifouling coating compositions include organic and inorganic compounds.

The dehydrating agents can be hygroscopic materials that absorb water or binds water as crystal water, often referred to as desiccants. Examples of desiccants include calcium sulphate hemihydrate, anhydrous calcium sulphate, anhydrous magnesium sulphate, anhydrous sodium sulphate, anhydrous zinc sulphate, molecular sieves and zeolites.

The dehydrating agent can be a compound that chemically reacts with water. Examples of dehydrating agents that reacts with water include orthoesters such as trimethyl orthoformate, triethyl orthoformate, tripropyl orthoformate, triisopropyl orthoformate, tributyl orthoformate, trimethyl orthoacetate, triethyl orthoacetate, tributyl orthoacetate and triethyl orthopropionate; ketals; acetals; enol ethers; orthoborates such as trimethyl borate, triethyl borate, tripropyl borate, triisopropyl borate, tributyl borate and tri-tert-butyl borate; organosilanes such as trimethoxymethyl silane, vinyltrimethoxysilane, phenyltrimethoxysilane, tetraethoxysilane and ethyl polysilicate.

Other stabilizers that contribute to the storage stability of the antifouling coating composition are monomeric and polymeric carbodiimide compounds, such as bis(2,6-diisopropylphenyl)carbodiimide and poly(1,3,5-triisopropylphenylene-2,4-carbodiimide) and others as described in patent application WO2014064049.

Preferred dehydrating agents are those that chemically react with water. Particularly preferred dehydrating agents are organosilanes.

Examples of pigments are inorganic pigments such as titanium dioxide, iron oxides, zinc oxide, zinc phosphate, graphite and carbon black; organic pigments such as phthalocyanine compounds and azo pigments.

Examples of extenders and fillers are minerals such as dolomite, plastorite, calcite, quartz, barite, magnesite, aragonite, silica, wollastonite, talc, chlorite, mica, kaolin and feldspar; synthetic inorganic compounds such as calcium carbonate, magnesium carbonate, barium sulphate, calcium silicate and silica; polymeric and inorganic microspheres such as uncoated or coated hollow and solid glass beads, uncoated or coated hollow and solid ceramic beads, hollow, porous and compact beads of polymeric materials such as poly(methyl methacrylate), poly(methyl methacrylate-co-ethylene glycol dimethacrylate), poly(styrene-co-ethylene glycol dimethacrylate), poly(styrene-co-divinylbenzene), polystyrene, poly(vinyl chloride).

Examples of additives that can be added to an antifouling coating composition are reinforcing agents, thixotropic agents, thickening agents, anti-settling agents, plasticizers and solvents.

Examples of reinforcing agents are flakes and fibres. Fibres include natural and synthetic inorganic fibres such as silicon-containing fibres, carbon fibres, oxide fibres, carbide fibres, nitride fibres, sulphide fibres, phosphate fibres, mineral fibres; metallic fibres; natural and synthetic organic fibres such as cellulose fibres, rubber fibres, acrylic fibres, polyamide fibres, polyimide fibres, polyester fibres, polyhydrazide fibres, polyvinylchloride fibres, polyethylene fibres and others as described in WO 00/77102. Preferably, the fibres have an average length of 25 to 2,000 µm and an average thickness of 1 to 50 µm with a ratio between the average length and the average thickness of at least 5.

Examples of thixotropic agents, thickening agents and anti-settling agents are silicas such as fumed silicas, organo-modified clays, amide waxes, polyamide waxes, amide derivatives, polyethylene waxes, oxidised polyethylene waxes, hydrogenated castor oil wax, ethyl cellulose, aluminium stearates and mixtures of thereof.

Examples of plasticizers are chlorinated paraffins, phthalates, phosphate esters, sulphonamides, adipates and epoxidised vegetable oils.

In general, any of these optional components can be present in an amount ranging from 0.1 to 50 wt%, typically 0.20 to 20 wt%, preferably 0.50 to 15 wt% of the antifouling composition. It will be appreciated that the amount of these optional components will vary depending on the end use.

It is highly preferred if the antifouling composition contains a solvent. This solvent is preferably volatile and is preferably organic. It may have an evaporation rate of more than 0.05 (n-BuAc = 1).

Examples of suitable organic solvent include aromatic hydrocarbons such as xylene, toluene, mesitylene; ketones such as methyl ethyl ketone, methyl isobutyl ketone, methyl isoamyl ketone, cyclopentanone, cyclohexanone; esters such as butyl acetate, tert-butyl acetate, amyl acetate, ethylene glycol methyl ether acetate; ethers such as ethylene glycol dimethyl ether, diethylene glycol dimethyl ether, dibutyl ether, dioxane, tetrahydrofuran, alcohols such as n-butanol, isobutanol, benzyl alcohol; ether alcohols such as butoxyethanol, 1-methoxy-2-propanol; aliphatic hydrocarbons such as white spirit; and optionally a mixture of two or more solvents. These compounds are used alone or as a mixture of two or more thereof.

Preferred solvents are aromatic solvents, optionally together with 1-methoxy-2-propanol or butyl acetate, especially xylene and 1-methoxy-2-propanol.

The amount of solvent is preferably as low as possible. The solvent content may be up to 50 wt% of the composition, preferably up to 45 wt% of the composition, such as up to 40 wt% but may be as low as 15 wt% or less, e.g. 10 wt% or less. Again, the skilled man will appreciate that the solvent content will vary depending on the other components present and the end use of the coating composition.

Alternatively the coating can be dispersed in an organic non-solvent for the film-forming components in the coating composition or in an aqueous dispersion.

The antifouling coating composition of the invention can be applied to a whole or part of any object surface which is subject to fouling. The surface may be permanently or intermittently underwater (e.g. through tide movement, different cargo loading or swell). The object surface will typically be the hull of a vessel or surface of a fixed marine object such as an oil platform or buoy. Application of the coating composition can be accomplished by any convenient means, e.g. via painting (e.g. with brush or roller) or spraying the coating onto the object. Typically the surface will need to be separated from the seawater to allow coating. The application of the coating can be achieved as conventionally known in the art.

When applying the antifouling coating to an object (e.g. a ship hull) the surface of the object is typically not protected solely by a single coat of antifouling. Depending on the nature of the surface the antifouling coating can be applied directly to an existing coating system. Such a coating system may comprise several layers of paint of different generic types (e.g. epoxy, polyester, vinyl or acrylic or mixtures thereof). If the surface is a clean and intact antifouling coating from a previous application, the new antifouling paint can be applied directly, typically as one or two coats with more in exceptional cases.

Alternatively, the artisan may start with an uncoated surface (e.g. steel, aluminium, plastic, composite, glass fiber or carbon fiber). To protect such a surface, the full coating system will typically comprise one or two layers of an anticorrosive coating, one layer of tie-coat and one or two layers of antifouling paint. The person skilled in the art will be familiar with these coating layers.

In exceptional cases additional antifouling paint layers may be applied.

In a further embodiment therefore the invention provides a substrate having coated thereon an anticorrosive coating layer such as an epoxy primer, a tie layer and an antifouling coating composition as herein defined.

When applied on a substrate in accordance with the "leached layer" test described in the experimental section, the leached layer after 12 months is preferably less than 75 µm, preferably less than 70 µm, more preferably less than 65 µm, and in some cases may be even less than 60 µm.

When applied on a substrate in accordance with the "polishing" test described in the experimental section, the amount of film thickness reduction after 12 months is preferably in the range of 10-250 µm, such as 10-150 µm, such as 15-100 µm, such as 20-80 µm.

The invention will now be defined with reference to the following non limiting examples.

### Determination Methods

### Determination of polymer solution viscosity

The viscosity of the polymers are determined in accordance with ASTM D2196:15 Test method A using a Brookfield DV-I Prime viscometer with LV-2 or LV-4 spindle at 12 rpm. The polymers are tempered to 23.0°C ± 0.5°C before the measurements.

### Determination of solids content of the polymer solutions

The solids content in the polymer solutions are determined in accordance with ISO 3251:2008. A test sample of 0.5 g ± 0.1 g are taken out and dried in a ventilated oven at 105°C for 3 hours. The weight of the residual material is considered to be the non-volatile matter (NVM). The non-volatile matter content is expressed in weight percent. The value given is the average of three parallels.

### Determination of polymer average molecular weights distribution

The polymers are characterised by Gel Permeation Chromatography (GPC) measurement. The molecular weight distribution (MWD) was determined using a Malvern Omnisec Resolve and Reveal system with two PLgel 5 µm Mixed-D columns from Agilent in series. The columns were calibrated by conventional calibration using narrow polystyrene standards.

Samples were prepared by dissolving an amount of polymer solution corresponding to 25 mg dry polymer in 5 mL THF. The samples were kept for minimum 3 hours at room temperature prior to sampling for the GPC measurements. Before analysis the samples are filtrated through 0.45 µm Nylon filters. The weight-average molecular weight (Mw) and the polydispersity index (PDI), given as Mw/Mn, are reported.

Analysis conditions are given below:

| | |
|---|---|
| Detector | RI |
| Cell volume | 12 µl |
| Column Set | Agilent PLgel 5 µm |
| | Mixed-D, 2 columns in series |
| Mobile Phase | THF |
| Flow rate | 1 ml/min |
| Injection volume | 100 µl |
| Autosampler Temperature | 25 °C |
| Column Oven Temperature | 35 °C |
| Detector Oven Temperature | 35 °C |
| Data Processing | Omnisec 5.1 |
| Calibration standards | Agilent Polystyrene |
| | Medium EasiVials (4 ml) |
| | Red, Yellow and Green |

### Determination of the glass transition temperature

The glass transition temperature (Tg) is obtained by Differential Scanning Calorimetry (DSC) measurements. The DSC measurements were performed on a TA Instruments DSC Q200. Samples were prepared by drawdown on glass panel with applicator with 100 µm gap size. The glass panels were dried for 24 hour at 23°C and 24 hours at 50°C in a heating cabinet. The dry polymer material was scraped off the glass panels and approximately 10 mg were transferred to an aluminium pan before sealing with a non-hermetic lid. During the measurement scans were recorded at a heating rate of 20°C/min and cooling rate of 10°C/min with an empty pan as reference. The data were processed using Universal Analysis software from TA Instruments.

The inflection point of the glass transition range, as defined in ASTM E1356-08, of the second heating is reported as the Tg of the polymers.

### General procedure for preparation of antifouling coating compositions

The components were mixed in the proportions given in Table 2-6. The mixture was dispersed in the presence of glass beads (approx. 2mm in diameter) in a paint can of 250 ml using a vibrational shaker for 15 minutes. The glass beads were filtered out before testing.

Solvesso 100 was purchased from Brenntag.

### Determination of VOC

The VOC (g/L) of the antifouling coating compositions was calculated according to ASTM D5201-01.

### Determination of paint viscosity using Cone and Plate viscometer

The viscosities of the antifouling coating compositions were determined according to ISO 2884-1: 1999 using a Cone and Plate viscometer set at a temperature of 23 °C, working at a shear rate of 10000 s-1 and providing viscosity measurement range of 0-10 P. The result given is the average of three measurements. The results are shown in Table 7-9.

### Coating film hardness - König pendulum hardness

Pendulum hardness tests were performed according to ASTM D4366-95 Test method A. Each of the antifouling coating compositions was applied to a transparent glass plate (75×150×2 mm) using a film applicator with 300 µm gap size. The coating films were dried for 3 days at 23°C and 3 days in an oven at 50°C. The coating film hardness of the resulting dry coating film was measured at 23°C using Erichsen 299/300 pendulum hardness tester. The results (count number) are shown in Table 7.

### Determination of the amount of polishing and leached layer formation of antifouling coating films in sea water

The amount of polishing is determined by measuring the reduction in film thickness of a coating film. For this test PVC discs are used. The coating compositions are applied as radial stripes on the disc using a film applicator. A small area of non-polishing paint is applied and used as a reference for the determination of the amount of polishing. The PVC discs are mounted on a shaft and rotated in a container with flow through of seawater. Natural filtered seawater at a fixed temperature (25°C ± 2°C) is used.

After 12 months rotation a sample of each paint film (still attached to the PVC) is cut out and embedded in epoxy resin. After curing, the samples are polished so that a cross section of the coating film (including the area with non-polishing reference) can be examined with an optical microscope. The amount of polishing is measured as the reduction in film thickness compared to the area under the non-polishing reference. The leached layer has a distinct colour difference from the intact paint film and is also measured. The colour change is due to the dissolution and release of soluble pigments from the leached layer. All measurements are made using a digital camera and calibrated software. The results are given in Table 7-9.

### Examples

### Preparation of acrylic copolymer solution A-1

19.20 parts of xylene and 7.70 parts of 1-methoxy-2-propanol were charged to a temperature-controlled reaction vessel equipped with a stirrer, a reflux condenser, a nitrogen inlet and a feed inlet. The reaction vessel was heated and maintained at 85°C. A pre-mix of 53.80 parts n-butyl acrylate, 3.40 parts n-butyl methacrylate, 2.40 parts methyl methacrylate, 0.40 parts methacrylic acid, 0.93 parts 2,2'-azodi(2-methylbutyronitrile) and 8.00 parts xylene was prepared and charged to the reaction vessel at a constant rate over 2 hours and 30 minutes under a nitrogen atmosphere. After a further 1 hour reaction a post-addition of a boost initiator solution of 0.20 parts 2,2'-azodi(2-methylbutyronitrile) and 4.00 parts xylene was charged to the reaction vessel at a constant rate over 15 minutes. The reaction vessel was maintained at the reaction temperature for a further 1 hour and then cooled to room temperature. The amount of ingredients are given in parts by weight.

Copolymer solution A-1 had viscosity of 327 cP, non-volatile content of 61.7 wt%, Mw 36 200, PDI 3.23 and Tg -39°C.

### Preparation of acrylic copolymer solution A-2

28.80 parts of xylene and 6.80 parts of 1-methoxy-2-propanol were charged to a temperature-controlled reaction vessel equipped with a stirrer, a reflux condenser, a nitrogen inlet and a feed inlet. The reaction vessel was heated and maintained at 95°C. A pre-mix of 9.80 parts n-butyl acrylate, 29.50 parts methyl methacrylate, 9.80 parts 2-(2-ethoxyethoxy)ethyl acrylate, 0.75 parts 2,2'-azodi(2-methylbutyronitrile), 5.80 parts xylene and 4.00 parts of 1-methoxy-2-propanol was prepared and charged to the reaction vessel at a constant rate over 2 hours and 30 minutes under a nitrogen atmosphere. After a further 1 hour reaction a post-addition of a boost initiator solution of 0.20 parts 2,2'-azodi(2-methylbutyronitrile) and 4.60 parts xylene was charged to the reaction vessel at a constant rate over 15 minutes. The reaction vessel was maintained at the reaction temperature for a further 1 hour and then cooled to room temperature. The amount of ingredients are given in parts by weight.

Copolymer solution A-2 had viscosity of 557 cP, non-volatile content of 51.9 wt%, Mw 28 500, PDI 2.88 and Tg 19°C.

### Preparation of acrylic copolymer solution A-3

26.10 parts of xylene and 6.10 parts of 1-methoxy-2-propanol were charged to a temperature-controlled reaction vessel equipped with a stirrer, a reflux condenser, a nitrogen inlet and a feed inlet. The reaction vessel was heated and maintained at 105°C. A pre-mix of 29.90 parts methyl methacrylate, 22.90 parts 2-methoxyethyl acrylate, 1.65 parts dibenzoyl peroxide (50% in dicyclohexyl phthalate), 5.90 parts xylene and 2.90 parts of 1-methoxy-2-propanol was prepared and charged to the reaction vessel at a constant rate over 2 hours and 30 minutes under a nitrogen atmosphere. After a further 1 hour reaction a post-addition of a boost initiator solution of 0.35 parts dibenzoyl peroxide (50% in dicyclohexyl phthalate) and 4.20 parts xylene was charged to the reaction vessel at a constant rate over 15 minutes. The reaction vessel was maintained at the reaction temperature for a further 1 hour and then cooled to room temperature. The amount of ingredients are given in parts by weight.

Copolymer solution A-3 had viscosity of 945 cP, non-volatile content of 55.5 wt%, Mw 23 600, PDI 2.60 and Tg 23°C.

### Preparation of acrylic copolymer solution A-4

35.00 parts of xylene was charged to a temperature-controlled reaction vessel equipped with a stirrer, a reflux condenser, a nitrogen inlet and a feed inlet. The reaction vessel was heated and maintained at 85°C. A pre-mix of 16.50 parts methyl methacrylate, 3.50 parts 2-methoxyethyl acrylate, 30.00 parts of triisopropylsilyl acrylate, 0.50 parts 2,2'-azodi(2-methylbutyronitrile) and 5.00 parts xylene was prepared and charged to the reaction vessel at a constant rate over 2 hours under a nitrogen atmosphere. After a further 1 hour reaction a post-addition of a boost initiator solution of 0.10 parts 2,2'-azodi(2-methylbutyronitrile) and 5.00 parts xylene was charged to the reaction vessel at a constant rate over 15 minutes. The reaction vessel was maintained at the reaction temperature for a further 2 hour. The temperature of the reaction vessel was increased to 120°C and maintained for 30 minutes and then cooled to room temperature. The amount of ingredients are given in parts by weight.

Copolymer solution A-4 had viscosity of 152 cP, non-volatile content of 50.5 wt%, Mw 28 000, PDI 3.61 and Tg 35°C.

Overview of acid compounds tested are given in Table 1.

**.Table 1. Carboxylic acids used in the examples.**

| Samples | Supplier | No of C | CAS No. | % branched | Acid number (mg KOH/g) | Iodine number (g I₂/100 g) | Form (at 23 °C) | Melting point (°C) |
|---|---|---|---|---|---|---|---|---|
| Fineoxocol Isopalmitic acid | Nissan Chemicals | 16 | 25354-97-6 | 100 | 219 | 0 | liquid | -3 |
| Fineoxocol Isostearic acid | Nissan Chemicals | 18 | 30399-84-9 | 100 | 195 | 0 | liquid | <-30 |
| Fineoxocol Isostearic acid N | Nissan Chemicals | 18 | 30399-84-9 | 100 | 195 | 0 | liquid | <-30 |
| Radiacid 0906 | Oleon | 16-18 (97 %) | 30399-84-9 | 75 | 180-188 | <24 | liquid | |
| Radiacid 0907 | Oleon | 16-18 (98 %) | 30399-84-9 | 87 | 180-188 | <8 | liquid | < 8** |
| Radiacid 0909 | Oleon | 16-18 (98 %) | 30399-84-9 | 90 | 190-197 | <2 | liquid | < 5** |
| Versatic Acid 5 | Hexion | 5 | 75-98-9 | 100 | 544 | 0 | solid | 34* |
| Stearic acid | Sigma Aldrich | 18 | 57-11-4 | 0 | 196 | 0 | solid | 67-72 |
| Gum Rosin | AV Pound | 20 | 8050-09-7 | - | 156-175 | 5-25 | solid | 72-83 |
| Radiacid 0968 | Oleon | 16-18 (97 %) | 68955-98-6 | 55 | 180-190 | 40 | solid | 23-32* |
| 2-Ethylhexanoic acid | Sigma Aldrich | 8 | 149-57-5 | 100 | 389 | 0 | liquid | -59 |
| Isononanoic acid | BASF | 9 | 3302-10-1 | 100 | 337 | 0 | liquid | <-60 |
| Versatic acid 10 | Hexion | 10 | 26896-20-8 | 100 | 318-330 | 0 | liquid | -30 |
| Tall oil fatty acid (TOFA) | Oleon | 18 | 61790-12-3 | low | 194 | 155 | liquid | |

| | | | | | | | | |
|---|---|---|---|---|---|---|---|---|
| * Pour point ** Cloud point | | | | | | | | |

**Table 2: Paint compositions**

| | Patent example | Coat #1 | Coat #2 | Coat #3 | Coat #4 | Coat #5 | Coat #6 | Coat #7 | Coat #8 | Coat #9 | Coat #10 | Coat #11 |
|---|---|---|---|---|---|---|---|---|---|---|---|---|
| Acrylic binders | Solution A-1 | 6.08 | 6.07 | 6.08 | 6.08 | 6.08 | 6.10 | 6.10 | 6.10 | 6.11 | 6.10 | 6.11 |
| | Solution A-3 | 15.87 | 15.87 | 15.86 | 15.87 | 15.87 | 15.93 | 15.93 | 15.93 | 15.94 | 15.94 | 15.94 |
| Carboxylic acids | Isostearic acid N | 2.07 | - | - | - | - | - | - | - | - | 4.15 | - |
| | Isopalmitic acid | - | 2.07 | - | - | - | - | - | - | - | - | 4.15 |
| | Radiacid 0907 | - | - | 2.09 | - | - | 4.19 | - | - | - | - | - |
| | Radiacid 0906 | - | - | - | 2.09 | - | - | 4.19 | - | - | - | - |
| | Radiacid 0909 | - | - | - | - | 2.09 | - | - | 4.19 | - | - | - |
| | Isostearic acid | - | - | - | - | - | - | - | - | 4.15 | - | - |
| | Versatic Acid 5 | - | - | - | - | - | - | - | - | - | - | - |
| | 2-Ethylhexanoic acid | - | - | - | - | - | - | - | - | - | - | - |
| | Isononanoic acid | - | - | - | - | - | - | - | - | - | - | - |
| | Versatic acid 10 | - | - | - | - | - | - | - | - | - | - | - |
| | Stearic acid | - | - | - | - | - | - | - | - | - | - | - |
| | Radiacid 0968 | - | - | - | - | - | - | - | - | - | - | - |
| | Gum rosin solution (60 wt% in Xylene) | 12.55 | 12.55 | 12.55 | 12.55 | 12.55 | 8.40 | 8.40 | 8.40 | 8.40 | 8.40 | 8.40 |
| | TOFA | - | - | - | - | - | - | - | - | - | - | - |
| Biocides | Cuprous oxide | 30.36 | 30.36 | 30.35 | 30.35 | 30.35 | 30.49 | 30.48 | 30.49 | 30.50 | 30.50 | 30.50 |
| | Zineb | 7.48 | 7.48 | 7.47 | 7.47 | 7.47 | 7.51 | 7.51 | 7.51 | 7.51 | 7.51 | 7.51 |
| Pigments & extenders | Zinc oxide | 7.20 | 7.20 | 7.20 | 7.20 | 7.20 | 7.23 | 7.23 | 7.23 | 7.24 | 7.24 | 7.24 |
| | Iron oxide | 2.80 | 2.80 | 2.80 | 2.80 | 2.80 | 2.81 | 2.81 | 2.81 | 2.81 | 2.81 | 2.81 |
| | Titanium dioxide | 2.80 | 2.80 | 2.80 | 2.80 | 2.80 | 2.81 | 2.81 | 2.81 | 2.81 | 2.81 | 2.81 |
| | Dolomite | 2.95 | 2.95 | 2.95 | 2.95 | 2.95 | 2.96 | 2.96 | 2.96 | 2.96 | 2.96 | 2.96 |
| Additive | Bentone 52 | 0.92 | 0.92 | 0.92 | 0.92 | 0.92 | 0.93 | 0.93 | 0.93 | 0.93 | 0.93 | 0.93 |
| Solvents | Ethanol | 0.46 | 0.46 | 0.46 | 0.46 | 0.46 | 0.46 | 0.46 | 0.46 | 0.46 | 0.46 | 0.46 |
| | Solvesso 100 | 2.06 | 2.06 | 2.06 | 2.06 | 2.06 | 2.06 | 2.06 | 2.06 | 2.06 | 2.07 | 2.07 |
| | Xylene | 6.40 | 6.41 | 6.41 | 6.40 | 6.40 | 8.12 | 8.13 | 8.12 | 8.12 | 8.12 | 8.11 |

**Table 3: Comparative paint compositions**

| | Patent example | CE#1 | CE#2 | CE#3 | CE#4 | CE#5 | CE#6 | CE#7 |
|---|---|---|---|---|---|---|---|---|
| Acrylic binders | Solution A-1 | 6.05 | 6.09 | 6.07 | 6.07 | 6.07 | 6.10 | 6.10 |
| | Solution A-3 | 15.80 | 15.91 | 15.86 | 15.86 | 15.86 | 15.92 | 15.92 |
| Carboxylic acids | Isostearic acid N | - | - | - | - | - | - | - |
| | Isopalmitic acid | - | - | - | - | - | - | - |
| | Radiacid 0907 | - | - | - | - | - | - | - |
| | Radiacid 0906 | - | - | - | - | - | - | - |
| | Radiacid 0909 | - | - | - | - | - | - | - |
| | Isostearic acid | - | - | - | - | - | - | - |
| | Versatic Acid 5 | - | 4.33 | - | - | - | - | - |
| | 2-Ethylhexanoic acid | - | - | - | 2.11 | - | - | - |
| | Isononanoic acid | - | - | 2.11 | - | - | 4.24 | - |
| | Versatic acid 10 | - | - | - | - | 2.13 | - | 4.28 |
| | Stearic acid | - | - | - | - | - | - | - |
| | Radiacid 0968 | - | - | - | - | - | - | - |
| | Gum rosin solution (60 wt% in Xylene) | 16.66 | 8.39 | 12.55 | 12.55 | 12.54 | 8.40 | 8.39 |
| | TOFA | - | - | - | - | - | - | - |
| Biocides | Cuprous oxide | 30.23 | 30.44 | 30.35 | 30.35 | 30.34 | 30.47 | 30.46 |
| | Zineb | 7.44 | 7.50 | 7.47 | 7.47 | 7.47 | 7.50 | 7.50 |
| Pigments & extenders | Zinc oxide | 7.17 | 7.22 | 7.20 | 7.20 | 7.20 | 7.23 | 7.23 |
| | Iron oxide | 2.78 | 2.80 | 2.79 | 2.79 | 2.79 | 2.81 | 2.80 |
| | Titanium dioxide | 2.78 | 2.80 | 2.79 | 2.79 | 2.79 | 2.81 | 2.80 |
| | Dolomite | 2.94 | 2.96 | 2.94 | 2.95 | 2.95 | 2.95 | 2.96 |
| Additive | Bentone 52 | 0.92 | 0.92 | 0.92 | 0.92 | 0.92 | 0.93 | 0.92 |
| Solvents | Ethanol | 0.45 | 0.46 | 0.46 | 0.46 | 0.46 | 0.46 | 0.46 |
| | Solvesso 100 | 2.05 | 2.06 | 2.06 | 2.06 | 2.06 | 2.06 | 2.06 |
| | Xylene | 4.73 | 8.12 | 6.43 | 6.42 | 6.42 | 8.12 | 8.12 |

**Table 4: Paint compositions**

| | Patent example | Coat #12 | Coat #13 | Coat #14 | Coat #15 | Coat #16 | Coat #17 |
|---|---|---|---|---|---|---|---|
| Acrylic binders | Solution A-1 | 3.44 | 3.44 | 3.44 | 3.44 | 3.44 | 3.45 |
| | Solution A-2 | 12.02 | 12.02 | 12.02 | 12.02 | 12.02 | 12.07 |
| | Solution A-4 | 13.88 | 13.88 | 13.88 | 13.88 | 13.88 | 13.93 |
| Carboxylic acids | Isostearic acid N | 1.71 | - | - | - | - | - |
| | Radiacid 0907 | - | 1.73 | - | - | - | 3.47 |
| | Radiacid 0906 | - | - | 1.73 | - | - | - |
| | Radiacid 0909 | - | - | - | 1.73 | - | - |
| | Isostearic acid | - | - | - | - | 1.71 | - |
| | Isononanoic acid | - | - | - | - | - | - |
| | Versatic acid 10 | - | - | - | - | - | - |
| | Stearic acid | - | - | - | - | - | - |
| | Gum rosin solution (60 wt% in Xylene) | 3.46 | 3.46 | 3.46 | 3.46 | 3.46 | - |
| | TOFA | - | - | - | - | - | - |
| Biocides | Cuprous oxide | 32.91 | 32.90 | 32.90 | 32.90 | 32.91 | 33.02 |
| | Zineb | 4.50 | 4.50 | 4.50 | 4.50 | 4.50 | 4.52 |
| | Copper pyrithione | 1.39 | 1.39 | 1.39 | 1.39 | 1.39 | 1.39 |
| Pigments & extenders | Zinc oxide | 8.66 | 8.66 | 8.66 | 8.66 | 8.66 | 8.69 |
| | Iron oxide | 1.39 | 1.39 | 1.39 | 1.39 | 1.39 | 1.39 |
| | Titanium dioxide | 2.08 | 2.08 | 2.08 | 2.08 | 2.08 | 2.09 |
| | Dolomite | 3.46 | 3.45 | 3.45 | 3.46 | 3.46 | 3.46 |
| Additives | Disparlon A603-20X | 1.04 | 1.04 | 1.04 | 1.04 | 1.04 | 1.04 |
| | Tetraethoxysilane | 0.35 | 0.35 | 0.35 | 0.35 | 0.35 | 0.35 |
| Solvents | Solvesso 100 | 2.08 | 2.08 | 2.08 | 2.08 | 2.08 | 2.08 |
| | Xylene | 7.63 | 7.63 | 7.63 | 7.62 | 7.63 | 9.05 |

**Table 5: Comparative paint compositions**

| | Patent example | CE#8 | CE#9 | CE#10 | CE#11 | CE#12 | CE#13 | CE#14 |
|---|---|---|---|---|---|---|---|---|
| Acrylic binders | Solution A-1 | 3.43 | 3.44 | 3.44 | 3.44 | 3.44 | 3.43 | 3.44 |
| | Solution A-2 | 11.98 | 12.02 | 12.02 | 12.03 | 12.02 | 12.02 | 12.06 |
| | Solution A-4 | 13.83 | 13.88 | 13.88 | 13.89 | 13.87 | 13.88 | 13.92 |
| Carboxylic acids | Isostearic acid N | - | - | - | - | - | - | - |
| | Radiacid 0907 | - | - | - | - | - | - | - |
| | Radiacid 0906 | - | - | - | - | - | - | - |
| | Radiacid 0909 | - | - | - | - | - | - | - |
| | 2-Ethylhexanoic acid | - | - | 1.75 | - | - | - | - |
| | Isononanoic acid | - | 1.75 | - | - | - | - | 3.51 |
| | Versatic acid 10 | - | - | - | - | 1.77 | - | - |
| | Stearic acid | - | - | - | 1.66 | - | - | - |
| | Gum rosin solution (60 wt% in Xylene) | 6.91 | 3.46 | 3.46 | 3.47 | 3.46 | 3.46 | - |
| | TOFA | - | - | - | - | - | 1.75 | - |
| Biocides | Cuprous oxide | 32.79 | 32.89 | 32.89 | 32.93 | 32.89 | 32.89 | 33.00 |
| | Zineb | 4.49 | 4.50 | 4.50 | 4.51 | 4.50 | 4.50 | 4.52 |
| | Copper pyrithione | 1.38 | 1.38 | 1.38 | 1.39 | 1.38 | 1.39 | 1.39 |
| Pigments & extenders | Zinc oxide | 8.63 | 8.66 | 8.66 | 8.66 | 8.65 | 8.66 | 8.69 |
| | Iron oxide | 1.38 | 1.38 | 1.38 | 1.39 | 1.38 | 1.39 | 1.39 |
| | Titanium dioxide | 2.07 | 2.08 | 2.08 | 2.08 | 2.08 | 2.08 | 2.08 |
| | Dolomite | 3.45 | 3.46 | 3.46 | 3.45 | 3.46 | 3.45 | 3.48 |
| Additives | Disparlon A603-20X | 1.04 | 1.04 | 1.04 | 1.04 | 1.04 | 1.04 | 1.04 |
| | Tetraethoxysilane | 0.35 | 0.35 | 0.35 | 0.35 | 0.35 | 0.35 | 0.35 |
| Solvents | Solvesso 100 | 2.07 | 2.08 | 2.08 | 2.08 | 2.08 | 2.08 | 2.08 |
| | Xylene | 6.20 | 7.63 | 7.63 | 7.63 | 7.63 | 7.63 | 9.05 |

**Table 6: Paint compositions and Comparative paint compositions**

| | Patent example | Coat# 18 | Coat# 19 | Coat#20 | CE#15 | CE#16 | CE#17 | CE#18 | CE#19 |
|---|---|---|---|---|---|---|---|---|---|
| Acrylic binder | Solution A-4 | 28.77 | 28.75 | 28.77 | 28.67 | 28.76 | 28.76 | 28.76 | 28.76 |
| Carboxylic acids | Isopalmitic acid | 1.58 | - | - | - | - | - | - | - |
| | Radiacid 0907 | - | 1.60 | - | - | - | - | - | - |
| | Isostearic acid | - | - | 1.58 | - | - | - | - | - |
| | 2-Ethylhexanoic acid | - | - | - | - | - | 1.62 | - | - |
| | Isononanoic acid | - | - | - | - | 1.62 | - | - | - |
| | Radiacid 0968 | - | - | - | - | - | - | 1.60 | - |
| | Gum rosin solution (60 wt% in Xylene) | 4.82 | 4.82 | 4.82 | 8.00 | 4.82 | 4.82 | 4.82 | 4.82 |
| | TOFA | - | - | - | - | - | - | - | 1.62 |
| Biocides | Cuprous oxide | 40.14 | 40.13 | 40.14 | 40.01 | 40.13 | 40.13 | 40.13 | 40.13 |
| | Copper pyrithione | 3.01 | 3.01 | 3.01 | 3.00 | 3.00 | 3.00 | 3.01 | 3.00 |
| Pigments & extenders | Zinc oxide | 6.02 | 6.02 | 6.02 | 6.00 | 6.02 | 6.02 | 6.02 | 6.02 |
| | Iron oxide | 2.01 | 2.01 | 2.01 | 2.00 | 2.01 | 2.01 | 2.01 | 2.01 |
| | Titanium dioxide | 1.00 | 1.00 | 1.00 | 1.00 | 1.00 | 1.00 | 1.00 | 1.00 |
| | Talc | 6.02 | 6.02 | 6.02 | 6.00 | 6.02 | 6.02 | 6.02 | 6.02 |
| Additives | Disparlon A603-20X | 1.50 | 1.50 | 1.50 | 1.50 | 1.50 | 1.50 | 1.50 | 1.50 |
| | Tetraethoxysilane | 0.50 | 0.50 | 0.50 | 0.50 | 0.50 | 0.50 | 0.50 | 0.50 |
| Solvent | Xylene | 4.63 | 4.64 | 4.63 | 3.32 | 4.62 | 4.62 | 4.63 | 4.62 |

The leached layer results for the Coat# 1-11, Coat#12-17 and Coat#18-20 are compared with the leached layers results for paints of the same type containing 100% rosin (CE#1, CE#8 and CE#15). The other CE# paints are with acids outside the invention and are therefore comparative examples.

**Table 7**

| Formulation no. | Calculated VOC (g/L) | Paint viscosity Cone & Plate (cP) | Film thickness reduction after 12 months (µm) | Leached layer after 12 months (µm) | Pendulum hardness (counts) |
|---|---|---|---|---|---|
| Coat#1 | 391 | 460 | 15 | 76 | 48 |
| Coat#2 | 391 | 465 | 23 | 73 | 48 |
| Coat#3 | 391 | 470 | 24 | 54 | 51 |
| Coat#4 | 391 | 465 | 27 | 54 | 52 |
| Coat#5 | 391 | 485 | 28 | 48 | 52 |
| Coat#6 | 391 | 390 | 19 | 50 | 19 |
| Coat#7 | 391 | 345 | 23 | 43 | 17 |
| Coat#8 | 391 | 400 | 18 | 45 | 19 |
| Coat#9 | 391 | 390 | 20 | 71 | 44 |
| Coat#10 | 391 | 345 | 19 | 49 | 16 |
| Coat#11 | 391 | 335 | 19 | 46 | 10 |
| CE#1 | 391 | 715 | 31 | 86 | 63 |
| CE#2 | 391 | Gel | - | - | - |
| CE#3 | 391 | 525 | 24 | 86 | 54 |
| CE#4 | 391 | 470 | 20 | 91 | 47 |
| CE#5 | 391 | 470 | 22 | 102 | 47 |
| CE#6 | 391 | 365 | 15 | 87 | 44 |
| CE#7 | 391 | 360 | 16 | 80 | 20 |

The results in table 7 show that the liquid monocarboxylic acid used in Coat#1 to Coat#11 generally gives lower paint viscosity and gives a reduced leached layer compared to the monocarboxylic acids used in CE#1 to CE#7.

**Table 8**

| Formulation no. | Calculated VOC (g/L) | Paint viscosity Cone & Plate (cP) | Film thickness reduction after 12 months (µm) | Leached layer after 12 months (µm) |
|---|---|---|---|---|
| Coat#12 | 435 | 240 | 13 | 46 |
| Coat#13 | 435 | 260 | 18 | 43 |
| Coat#14 | 435 | 250 | 9 | 21 |
| Coat#14 | 435 | 245 | 19 | 44 |
| Coat#16 | 435 | 245 | 16 | 46 |
| Coat#17 | 435 | 230 | 20 | 39 |
| CE#8 | 435 | 300 | 35 | 52 |
| CE#9 | 435 | 240 | 28 | 61 |
| CE#10 | 435 | 245 | 26 | 65 |
| CE#11 | 435 | 345 | 27 | 62 |
| CE#12 | 435 | 260 | 19 | 54 |
| CE#13 | 435 | 255 | 23 | 64 |
| CE#14 | 435 | 225 | 27 | 96 |

The results in table 8 show that the liquid monocarboxylic acid used in Coat#12 to Coat#17 generally gives lower paint viscosity and gives reduced leached layer compared to the monocarboxylic acids used in CE#8 to CE#14.

**Table 9**

| Formulation no. | Calculated VOC (g/L) | Paint viscosity Cone & Plate (cP) | Film thickness reduction after 12 months (µm) | Leached layer after 12 months (µm) |
|---|---|---|---|---|
| Coat#18 | 391 | 320 | 28 | 43 |
| Coat#19 | 391 | 325 | 29 | 45 |
| Coat#20 | 391 | 335 | 40 | 36 |
| CE#15 | 391 | 415 | 53 | 49 |
| CE#16 | 391 | 345 | 54 | 53 |
| CE#17 | 391 | 325 | 34 | 67 |
| CE#18 | 391 | 360 | 17 | 58 |
| CE#19 | 391 | 320 | 37 | 70 |

The results in table 9 show that the liquid monocarboxylic acid used in Coat#18 to Coat#20 generally gives lower paint viscosity and gives reduced leached layer compared to the monocarboxylic acids used in CE#15 to CE#19.

## Claims

1. A marine antifouling coating composition comprising:
(i) an acrylic binder comprising at least one polymer comprising (meth)acrylate and/or silyl (meth)acrylate monomers;
(ii) one or more rosins or derivatives thereof;
(iii) one or more marine antifouling agents; and
(iv) one or more monocarboxylic acids or a salt thereof selected from acyclic, saturated C12-C24 monocarboxylic acids or a salt thereof or acyclic, branched C12-C24 monocarboxylic acids or a salt thereof, wherein the monocarboxylic acid is in liquid form at 23 °C and ambient pressure (1 atm) and wherein the degree of branching of component (iv) is greater than 70 wt%
and wherein the ratio of component (ii):(iv) on a dry weight basis is in the range of 90:10 to 40:60.

2. A marine antifouling coating composition according to claim 1 wherein component (iv) is present in an amount of 0.5 to 10 wt% of the composition.

3. A marine antifouling coating composition according to any of claims 1 to 2 wherein said monocarboxylic acid comprises 14-20 carbon atoms, preferably 16 to 20 carbon atoms.

4. A marine antifouling coating composition according to any preceding claim wherein the monocarboxylic acid comprises at least one selected from isopalmitic acid or isostearic acid, e.g. a mixture thereof.

5. A marine antifouling coating composition according to any preceding claim wherein the rosin is gum rosin or a derivative thereof.

6. A marine antifouling coating composition according to any preceding claim wherein component (ii) is present in an amount of 0.25 to 20 wt% of the composition.

7. A marine antifouling coating composition according to any preceding claim wherein the acrylic binder component (i) comprises at least one polymer comprising the residue of at least one, preferably at least two of the following monomers: (meth)acrylic acid, methyl methacrylate, 2-methoxyethyl (meth)acrylate, n-butyl (meth)acrylate, 2-(2-ethoxyethoxy)ethyl (meth)acrylate, tetrahydrofurfuryl acrylate and triisopropylsilyl (meth)acrylate.

8. A marine antifouling coating composition according to any preceding claim wherein component (i) is present in an amount of 0.5 to 20 wt% of the composition.

9. A marine antifouling coating composition according to any preceding claim wherein the marine antifouling agent (iii) comprises at least one of cuprous oxide, copper pyrithione or zinc ethylenebis(dithiocarbamate).

10. A marine antifouling coating composition according to any preceding claim wherein the composition has a VOC of less than 400 g/L.

11. A process comprising the step of applying a marine antifouling coating composition according to any of claims 1 to 10 on a substrate.

12. A substrate coated with an antifouling coating composition according to any of claims 1 to 10.

13. Use of one or more monocarboxylic acids selected from acyclic, saturated C12-C24 monocarboxylic acids or a salt thereof or acyclic, branched C12-C24 monocarboxylic acids or a salt thereof (component iv) as defined in any of claims 1 to 10 to reduce the leached layer thickness in a marine coating composition comprising:
(i) an acrylic binder comprising at least one polymer comprising (meth)acrylate and/or silyl (meth)acrylate monomers;
(ii) rosin and/or derivatives thereof; and
(iii) a marine antifouling agent, and wherein the monocarboxylic acid is in liquid form at 23 °C and ambient pressure (1 atm) and wherein the degree of branching of component (iv) is greater than 70 wt%
and wherein the ratio of component (ii):(iv) on a dry weight basis is in the range of 90:10 to 40:60.

## Patentansprüche

1. Antifouling-Beschichtungszusammensetzung für die Schifffahrt, umfassend:
(i) ein Acryl-Bindemittel, das mindestens ein Polymer umfasst, das (Meth)acrylat- und/oder Silyl(meth)acrylat-Monomere umfasst;
(ii) ein oder mehrere Kolophoniumharze oder Derivate davon;
(iii) ein oder mehrere Antifouling-Mittel für die Schifffahrt; und
(iv) eine oder mehrere Monocarbonsäuren oder ein Salz davon, ausgewählt aus azyklischen, gesättigten C12-C24-Monocarbonsäuren oder einem Salz davon oder azyklischen, verzweigten C12-C24-Monocarbonsäuren oder einem Salz davon, wobei die Monocarbonsäure in flüssiger Form bei 23°C und Umgebungsdruck (1 atm) vorliegt und wobei der Verzweigungsgrad von Komponente (iv) mehr als 70 Gew.-% beträgt,
und wobei das Verhältnis von Komponente (ii):(iv) auf Trockengewichtsbasis im Bereich von 90:10 bis 40:60 liegt.

2. Antifouling-Beschichtungszusammensetzung für die Schifffahrt nach Anspruch 1, wobei Komponente (iv) in einer Menge von 0,5 bis 10 Gew.-% der Zusammensetzung vorliegt.

3. Antifouling-Beschichtungszusammensetzung für die Schifffahrt nach einem der Ansprüche 1 bis 2, wobei die Monocarbonsäure 14-20 Kohlenstoffatome, vorzugsweise 16 bis 20 Kohlenstoffatome, umfasst.

4. Antifouling-Beschichtungszusammensetzung für die Schifffahrt nach einem vorstehenden Anspruch, wobei die Monocarbonsäure mindestens eine, ausgewählt aus Isopalmitinsäure oder Isostearinsäure, z. B. ein Gemisch davon, umfasst.

5. Antifouling-Beschichtungszusammensetzung für die Schifffahrt nach einem vorstehenden Anspruch, wobei das Kolophoniumharz Gummikolophoniumharz oder ein Derivat davon ist.

6. Antifouling-Beschichtungszusammensetzung für die Schifffahrt nach einem vorstehenden Anspruch, wobei Komponente (ii) in einer Menge von 0,25 bis 20 Gew.-% der Zusammensetzung vorhanden ist.

7. Antifouling-Beschichtungszusammensetzung für die Schifffahrt nach einem vorstehenden Anspruch, wobei die Acryl-Bindemittelkomponente (i) mindestens ein Polymer umfasst, das den Rest von mindestens einem, vorzugsweise mindestens zwei der folgenden Monomere umfasst: (Meth)acrylsäure, Methylmethacrylat, 2-Methoxyethyl(meth)acrylat, n-Butyl(meth)acrylat, 2-(2-Ethoxyethoxy)ethyl(meth)acrylat, Tetrahydrofurfurylacrylat und Triisopropylsilyl(meth)acrylat.

8. Antifouling-Beschichtungszusammensetzung für die Schifffahrt nach einem vorstehenden Anspruch, wobei Komponente (i) in einer Menge von 0,5 bis 20 Gew.-% der Zusammensetzung vorhanden ist.

9. Antifouling-Beschichtungszusammensetzung für die Schifffahrt nach einem vorstehenden Anspruch, wobei das Antifouling-Mittel für die Schifffahrt (iii) mindestens eines von Kupferoxid, Kupferpyrithion oder Zinkethylenbis(dithiocarbamat) umfasst.

10. Antifouling-Beschichtungszusammensetzung für die Schifffahrt nach einem vorstehenden Anspruch, wobei die Zusammensetzung VOC von weniger als 400 g/L aufweist.

11. Prozess, der den Schritt des Aufbringens einer Antifouling-Beschichtungszusammensetzung für die Schifffahrt nach einem der Ansprüche 1 bis 10 auf ein Substrat umfasst.

12. Substrat, das mit einer Antifouling-Beschichtungszusammensetzung nach einem der Ansprüche 1 bis 10 beschichtet ist.

13. Verwendung einer oder mehrerer Monocarbonsäuren, ausgewählt aus azyklischen, gesättigten C12-C24-Monocarbonsäuren oder einem Salz davon oder azyklischen, verzweigten C12-C24-Monocarbonsäuren oder einem Salz davon (Komponente iv), nach einem der Ansprüche 1 bis 10, um die Dicke der ausgelaugten Schicht in einer Beschichtungszusammensetzung für die Schifffahrt zu verringern, umfassend:
(i) ein Acryl-Bindemittel, das mindestens ein Polymer umfasst, das (Meth)acrylat- und/oder Silyl(meth)acrylat-Monomere umfasst;
(ii) Kolophoniumharz und/oder Derivate davon; und
(iii) ein Antifouling-Mittel für die Schifffahrt, und wobei die Monocarbonsäure in flüssiger Form bei 23°C und Umgebungsdruck (1 atm) vorliegt und wobei der Verzweigungsgrad von Komponente (iv) mehr als 70 Gew.-% beträgt,
und wobei das Verhältnis von Komponente (ii):(iv) auf Trockengewichtsbasis im Bereich von 90:10 bis 40:60 liegt.

## Revendications

1. Composition de revêtement marin antisalissure comprenant :
(i) un liant acrylique comprenant au moins un polymère comprenant des monomères (méth)acrylate et/ou (méth)acrylate de silyle ;
(ii) une ou plusieurs colophanes ou des dérivés de celles-ci ;
(iii) un ou plusieurs agents antisalissure marins ; et
(iv) un ou plusieurs acides monocarboxyliques ou un sel de ceux-ci choisis parmi des acides monocarboxyliques acycliques saturés en C12-C24 ou un sel de ceux-ci ou des acides monocarboxyliques acycliques ramifiés en C12-C24 ou un sel de ceux-ci, dans laquelle l'acide monocarboxylique se présente sous forme liquide à 23 °C et à pression ambiante (1 atm) et dans laquelle le degré de ramification du composant (iv) est supérieur à 70 % en poids
et dans laquelle le rapport de composant (ii):(iv) sur une base de poids sec est dans la plage de 90:10 à 40:60.

2. Composition de revêtement marin antisalissure selon la revendication 1 dans laquelle le composant (iv) est présent en une quantité de 0,5 à 10 % en poids de la composition.

3. Composition de revêtement marin antisalissure selon l'une quelconque des revendications 1 à 2 dans laquelle ledit acide monocarboxylique comprend 14-20 atomes de carbone, de préférence 16 à 20 atomes de carbone.

4. Composition de revêtement marin antisalissure selon une quelconque revendication précédente dans laquelle l'acide monocarboxylique comprend au moins un acide choisi parmi l'acide isopalmitique ou l'acide isostéarique, par exemple un mélange de ceux-ci.

5. Composition de revêtement marin antisalissure selon une quelconque revendication précédente dans laquelle la colophane est de la colophane de gomme ou un dérivé de celle-ci.

6. Composition de revêtement marin antisalissure selon une quelconque revendication précédente dans laquelle le composant (ii) est présent en une quantité de 0,25 à 20 % en poids de la composition.

7. Composition de revêtement marin antisalissure selon une quelconque revendication précédente dans laquelle le composant liant acrylique (i) comprend au moins un polymère comprenant le résidu d'au moins un, de préférence d'au moins deux des monomères suivants : acide (méth)acrylique, méthacrylate de méthyle, (méth)acrylate de 2-méthoxyéthyle, (méth)acrylate de n-butyle, (méth)acrylate de 2-(2-éthoxyéthoxy)éthyle, acrylate de tétrahydrofurfuryle et (méth)acrylate de triisopropylsilyle.

8. Composition de revêtement marin antisalissure selon une quelconque revendication précédente dans laquelle le composant (i) est présent en une quantité de 0,5 à 20 % en poids de la composition.

9. Composition de revêtement marin antisalissure selon une quelconque revendication précédente dans laquelle l'agent antisalissure marin (iii) comprend au moins un parmi l'oxyde cuivreux, la pyrithione de cuivre ou l'éthylènebis(dithiocarbamate) de zinc.

10. Composition de revêtement marin antisalissure selon une quelconque revendication précédente dans laquelle la composition présente un COV inférieur à 400 g/L.

11. Processus comprenant l'étape d'application d'une composition de revêtement marin antisalissure selon l'une quelconque des revendications 1 à 10 sur un substrat.

12. Substrat revêtu d'une composition de revêtement marin antisalissure selon l'une quelconque des revendications 1 à 10.

13. Utilisation d'un ou plusieurs acides monocarboxyliques choisis parmi des acides monocarboxyliques acycliques saturés en C12-C24 ou un sel de ceux-ci ou des acides monocarboxyliques acycliques ramifiés en C12-C24 ou un sel de ceux-ci (composant iv) tels que définis dans l'une quelconque des revendications 1 à 10 pour réduire l'épaisseur de couche lixiviée dans une composition de revêtement marin comprenant :
(i) un liant acrylique comprenant au moins un polymère comprenant des monomères (méth)acrylate et/ou (méth)acrylate de silyle ;
(ii) de la colophane et/ou des dérivés de celle-ci ; et
(iii) un agent antisalissure marin, et dans laquelle l'acide monocarboxylique se présente sous forme liquide à 23 °C et à pression ambiante (1 atm) et dans laquelle le degré de ramification du composant (iv) est supérieur à 70 % en poids
et dans laquelle le rapport de composant (ii):(iv) sur une base de poids sec est dans la plage de 90:10 à 40:60.
